# EUROPÄISCHE PATENTSCHRIFT

(11) **EP 2 452 099 B1**
(45) Veröffentlichungstag und Bekanntmachung des Hinweises auf die Patenterteilung: **20.03.2013**
(21) Anmeldenummer: 10727415.1
(22) Anmeldetag: 24.06.2010
(51) Int. Cl.: F16H 48/10

(54) **STIRNRADDIFFERENZIAL**
SPUR GEAR DIFFERENTIAL
DIFFÉRENTIEL DROIT

(30) Priorität: 09.07.2009 DE 102009032286
(43) Veröffentlichungstag der Anmeldung: 16.05.2012
(73) Patentinhaber: Schaeffler Technologies AG & Co. KG, 91074 Herzogenaurach (DE)
(72) Erfinder: BIERMANN, Thorsten, 96193 Wachenroth (DE); HÖHN, Bernd-Robert, 81925 München (DE); KURTH, Franz, 85737 Ismaning (DE)
(86) Internationale Anmeldenummer: PCT/EP2010/059023
(87) Internationale Veröffentlichungsnummer: WO 2011/003747

(56) Entgegenhaltungen:
- WO-A1-92/12361
- DE-A1-102004 015 278
- DE-A1-102006 019 131

## Beschreibung

### Gebiet der Erfindung

Stirnraddifferenzial mit einer ersten Sonne und einer zweiten Sonne, wobei der ersten Sonne ein erster Satz Planetenräder und der zweiten Sonne ein zweiter Satz Planetenräder zugeordnet ist und der erste Satz Planetenräder mit dem zweiten Satz Planetenräder kämmt und dabei die Anzahl der Zähne der ersten Sonne gleich der Anzahl der Zähne der zweiten Sonne ist wobei durch Profilverschiebung die Zähne der ersten Sonne an einem Kopfkreis mit einem Kopfkreisdurchmesser angeordnet sind, der anders ist als der Kopfkreisdurchmesser eines Kopfkreises, an dem die Zähne der zweiten Sonne angeordnet sind, wobei der erste Satz Planetenräder nur mit der ersten Sonne kämmt und wobei der zweite Satz von Planetenrädem nur mit der zweiten Sonne kämmt.

### Hintergrund der Erfindung

DE 10 2004 015 278 A1 zeigt ein Differenzialgetriebe, für den Antrieb zweier gleichachsiger drehbarer Wellen, bei dem das zu den Wellen gleichachsige Getriebegehäuse beispielsweise über einen Zahnriemen rotierend angetrieben wird. Das Differenzialgetriebe ist ein Stirnradgetriebe.

Ein Stirnraddifferenzial bzw. Getriebe ist ein Getriebe nach Art eines Planetengetriebes, in dem die miteinander im Zahneingriff stehenden Ausgleichselemente Zahnräder mit Stirverzahnung sind.

Das Stirnraddifferenzial der gattungsbildenden Art ist mit einer ersten Sonne und einer zweiten Sonne versehen. Der ersten Sonne ist ein erster Satz Planetenräder und der zweiten Sonne ist ein zweiter Satz Planetenräder zugeordnet, die alle Stirnräder sind. Der erste Satz von Planetenrädern kämmt mit dem zweiten Satz der Planetenräder.

In DE 10 2006 019 131 B4 ist ein Verteilergetriebe mit Differenzial beschrieben, in dem das Differenzial ein Kegelraddifferenzial und das nach geschaltete aktive Achsgetriebe ein Planetengetriebe mit einer ersten Sonne und einer zweiten Sonne ist. Der ersten Sonne ist ein erster Satz Planetenräder und der zweiten Sonne ist ein zweiter Satz Planetenräder zugeordnet. Die Anzahl der Zähne der ersten Sonne ist gleich der Anzahl der zweiten Sonne. Eine Aktiv-Yaw-Funktion der Zweige wird über das wirksame Durchmesserverhältnis der ersten Verzahnung zu der zweiten Verzahnung erzielt. Zunächst wird als einfachstes aber eher als aufwändig eingeschätztes Mittel eine unterschiedliche Zähnezahl vorgeschlagen. Alternativ wird auch die gleiche Zähnezahl der beiden Verzahnungen vorgeschlagen, wobei dann über eine Profilverschiebung die notwendige Übersetzung zwischen dem zweiten Zahnrad, das zur Seitenwelle gekoppelt ist, und dem mit dem Differenzialgehäuse gekoppelten ersten Zahnrad vorgesehen ist.

Die Profilverschiebung ist eine dem Fachmann bekannte Maßnahme, durch die beispielsweise mit gleichen Werkzeugen Verzahnungen für verschiedene Betriebsbedingungen herstellbar sind [Prof. Dr.-Ing. habil S. Fronius, Kapitel 6 "Konstruktionslehre Antriebselemente, Verlag Technik Berlin, 1982].

Das Zahnprofil eines Stirnrades ist durch das Bezugsprofil und seine Lage zum Teilkreis zunächst eindeutig bestimmt. Der Teilkreis ist eine rechnerische Größe und ein zur Achse des Zahnrades senkrechter Kreis, dessen Umfang das Produkt aus der Zähnezahl und der Teilkreisteilung ist. Die Teilkreisteilung ist ein auf dem Teilkreis liegender Kreisbogen von Zahnmitte zu Zahnmitte und ist ein Vielfaches von π, so dass sich letztendlich der Teilkreis Do aus dem Produkt aus Modul und der Zähnezahl ergibt. Der Modul m ist das Verhältnis der Teilung p zu π, m = ρ/π. Der Teilkreis D₀ wird in der Fachwelt auch Grundkreis oder Erzeugungswälzkreis genannt.

Wälzkreise sind die gedachten Kreise der Zahnräder um die Achse des jeweiligen Zahnrades, die sich im Wälzpunkt berühren und dort, ohne gegeneinander zu gleiten, aneinander abwälzen[siehe auch K.Zirpke, Zahnrädern", VEB Fachbuchverlag Leipzig, 11. Auflage]. Anders gesagt, in diesem Fall übertragen die zwei in verzahnender Berührung befindliche Zahnflanken der Zahnräder die Drehbewegung mit konstantem Übersetzungsverhältnis wenn ihre gemeinsame Berührungsnormale stets durch den Wälzpunkt geht. Die Wälzkreise derartig verzahnter Teile Zahnräder sind die Teilkreise (0-Räder).

Die Wälzkreisdurchmesser der gepaarten Räder (Durchmesser der Betriebswälzkreise) können alternativ größer bzw. kleiner als ihre Teilkreisdurchmesser sein (V-Räder). Bestimmungsgröße für die Festlegung der Verzahnung ist also der radiale Abstand der Profilbezugslinie von dem auf dem Teilkreis liegenden Wälzpunkt.

Je nach Lage der Profilbezugslinie des Bezugsprofils zum Teilkreis wird deshalb zwischen den oben schon erwähnten 0- und V-Rädem unterschieden. Bei O-Rädern tangiert die Profilbezugslinie den Teilkreis. Bei V-Rädern tangiert die Profilbezugslinie den Teilkreis nicht sondern liegt radial außerhalb von diesem bzw. schneidet diesen zweimal.

Der radiale Abstand (in Millimetern) der Profilmittellinie vom Wälzpunkt wird als Profilverschiebung bezeichnet. Der Zahlenwert der Profilverschiebung für den Modul 1 wird als Profilverschiebungsfaktor x bezeichnet und ergibt sich aus dem Verhältnis von Profilverschiebung zu Modul. Anders ausgedrückt, die Größe der Profilverschiebung wird mit dem Faktor x in Teilen des Moduls ausgedrückt (xm) also, die Profilverschiebung dividiert durch den Modul. Bei positiver Profilverschiebung liegt die Profilbezugslinie außerhalb des Teilkreises. Bei negativer Profilverschiebung schneidet die Profilbezugslinie den Teilkreis.

### Beschreibung der Erfindung

Der Erfindung liegt die Aufgabe zugrunde, ein Stirnraddifferenzial zu schaffen, das einen reduzierten axialen Bauraum aufweist und gleichzeitig eine Reduzierung des Gewichts des gesamten Stirnraddifferenzials ermöglicht.

Die obige Aufgabe wird durch ein Stirnraddifferenzial gelöst, das die Merkmale des Anspruchs 1 und eines weiteren unabhängigen Anspruchs umfasst.

Das Stirnraddifferenzial der gegenwärtigen Erfindung besitzt eine erste Sonne (erstes Sonnenzahnrad) und eine zweite Sonne (zweites Sonnenzahnrad). Der ersten Sonne ist ein erster Satz Planetenräder und der zweiten Sonne ist ein zweiter Satz Planetenräder zugeordnet.

Der erste Satz Planetenräder kämmt mit dem zweiten Satz Planetenräder. Die Zähne der Planetenräder des ersten Satzes sind breiter als die Zähne der Planetenräder des zweiten Satzes, weil die Zähne des ersten Satzes zugleich mit der ersten Sonne und mit den Planetenrädern des zweiten Satzes im Eingriff stehen und die Planetenräder des zweiten Satzes zugleich mit der zweiten Sonne.

Die Anzahl der Zähne der ersten Sonne ist gleich der Anzahl der Zähne der zweiten Sonne. Da der erste Satz der Planetenräder mit dem zweiten Satz der Planetenräder und jeweils eine der Sonnen mit einem der Sätze kämmt, sind, damit es nicht zur Kollision der einzelnen Verzahnungen miteinander kommt, die Verzahnungen der Sonnenräder mit extremer Profilverschiebung hergestellt.

Die Verzahnungen der Sonnenräder sind bei gleichen Zähnezahlen z und gleichem Modul m mit derart unterschiedlicher Profilverschiebung hergestellt, dass die Zähne des Planetensatzes mit den breiteren Zähnen nicht mit der Sonne in Eingriff kommen, welche nur mit den Planetenrädern mit den schmaleren Zähnen kämmt. Dies ist durch Verschiebung des Zahnprofils der Zähne der jeweiligen Sonne gegenüber dem Grundkreis seiner jeweiligen Verzahnung erzielt. Anders gesagt, ist der Abstand zwischen der Verzahnung der Zahnräder des ersten Satzes zur Verzahnung der zweiten Sonne durch Verschiebung des Zahnprofils der Zähne der jeweiligen Sonne gegenüber dem Grundkreis seiner jeweiligen Verzahnung erzielt.

Erfindungsgemäß ist der Kopfkreisdurchmesser des Kopfkreises der Zähne der ersten Sonne durch positive Profilverschiebung und der Kopfkreisdurchmesser des Kopfkreises der Zähne der zweiten Sonne durch negative Profilverschiebung realisiert.

Der Kopfkreis umgibt die Zähne bei Stirnrädern am Zahnkopf und der Kopfkreisdurchmesser ist dementsprechend der Außendurchmesser der Verzahnung und bestimmt den radialen Platzbedarf des Zahnrades.

Gemäß der Definition der Profilverschiebung im Kapitel Hintergrund der Erfindung" liegt demnach die Profilbezugslinie im Wälzkontakt der ersten Sonne durch positive Profilverschiebung außerhalb des Teilkreises. Die Profilbezugslinie im Wälzkontakt der der zweiten Sonne schneidet aufgrund negativer Profilverschiebung den Teilkreis zweimal.

Der Abstand des Eingriffs der Sonnen zu den Planetenrädem des jeweiligen Satzes wurde mit Profilverschiebung unterschiedlich gestaltet und damit auch der Abstand der Zahnradachse der Sonne zum jeweiligen Zahnrad des Satzes mit dem die jeweilige Sonne kämmt - wobei allerdings die Abstände der Zahnräder eines Satzes zur zugeordneten Sonne gleich sind.

Ausgestaltungen der Erfindung sehen vor:
- Der Profilverschiebungsfaktor x₁ der ersten Sonne ist größer als der Zahlenwert 1 und liegt vorzugsweise im Bereich von 1 < bis 1,5.
- Der Profilverschiebungsfaktor x₂ der zweiten Sonne ist kleiner als der Zahlenwert 1 und liegt vorzugsweise im Bereich 1 > bis 0,7.
- Der als Gesamtprofilverschiebungsfaktor x_{g} bezeichnete Absolutwert (absolute Betrag) der Differenzen möglicher Profilverschiebungsfaktoren der Verzahnung der ersten Sonne und der zweiten Sonne ist ≥ dem Zahlenwert 1,6 und liegt vorzugsweise im Bereich 2 bis 2,2 auf folgender rechnerischen Grundlage: x_{g} = | x₁ - x₂ |.
- Der Kopfkreisdurchmesser des Kopfkreises einer der Sonnen ist kleiner ist als der Fußkreisdurchmesser des Fußkreises der anderen Sonne. Der Fußkreis einer Stirnverzahnung ist der gedachte Kreis auf dem die Zähne dort angeordnet sind, wo die Zahnfüße an den Zahnlücken in das massive Material des zylindrischen Teils des Zahnrades übergehen. Dementsprechend definiert sich der Fußkreisdurchmesser durch eine Differenz von Kopfkreisdurchmesser abzüglich dem Zweifachen der radial gerichteten Zahnhöhe der Verzahnung: D_{F} = D_{K}- 2xH.
- Die Anzahl der Zähne der Planetenräder der Planetensätze ist vorzugsweise innerhalb des jeweiligen Planetensatzes und auch bei den Planetenrädern beider Planetensätze gleich - kann sich alternativ dazu aber auch unterscheiden. Das trifft auch auf die als Verzahnungsdurchmesser bezeichneten Kopfkreisdurchmesser, Fußkreisdurchmesser und Teilkreisdurchmesser der Planetenrädern eines Satzes und der Sätze untereinander zu .
- Das Stirnraddifferenzial kann als Stirnraddifferenzial mit gerader Verzahnung ausgebildet sein.
- Ebenso ist es möglich, das Stirnraddifferenzial als Stirnraddifferenzial mit schräger Verzahnung auszubilden.

Die Sonnen des Stirnraddifferenzials weisen unterschiedliche Kopfkreisdurchmesser auf, so dass bei der Montage des Stinraddifferenzials beispielsweise der Verzahnungsbereich der Planetenräder mit dem größeren Achsabstand über die Sonne mit dem kleineren Kopfkreisdurchmesser hinweg gezogen werden kann.

Ein weiterer unabhängiger Anspruch der Erfindung sieht ein Stirnraddifferenzial mit einer ersten Sonne und einer zweiten Sonne vor, in dem der ersten Sonne ein erster Satz von Planetenrädern und der zweiten Sonne ein zweiter Satz Planetenräder zugeordnet ist. Der erste Satz Planetenräder kämmt mit dem zweiten Satz Planetenräder. Die Anzahl der Zähne der ersten Sonne ist gleich der Anzahl der Zähne der zweiten Sonne. Durch Profilverschiebung sind die Zähne der ersten Sonne an einem Kopfkreisdurchmesser angeordnet, der anders ist als der Kopfkreisdurchmesser, an dem die Zähne der zweiten Sonne angeordnet sind. Die Planetenräder sind an mindestens einem gemeinsamen Steg drehbar abgestützt. Außerdem ist an dem Steg ein Zahnkranz mit Stinverzahnung befestigt.

Der Teilkreis der Verzahnung des Zahnkranzes der Stirnverzahnung ist konzentrisch zu den Teilkreisen der Sonnen angeordnet. Der Zahnkranz ist das Antriebselement (Leistungseingang in das Differenzial) des Stirnraddifferenzials, das zum Beispiel mit einem Ausgangsritzel eines Antriebsmotors im Zahneingriff steht, oder mittels eines Zahnriemens mit diesem verbunden ist.

Ausgestaltungen der Erfindung sehen vor:
- Der Zahnkranz umgreift die Planetensätze vorzugsweise radial außen.
- Beide Sätze Planetenräder sind gemeinsam an zwei Stegabschnitten des Steges abgestützt, die sich axial einander gegenüber liegen und die die Sätze zwischen nehmen.
- Die Sonnen und die Planetensätze sind von dem Steg, d.h. von den beiden Stegabschnitten eingekapselt.
- Alternativ sind die Sonnen und die Planetensätze und die Sonnen von dem Steg und von dem Zahnkranz eingekapselt, wobei der Zahnkranz ein ringförmiges Bauteil ist, das die Sätze und die Sonnen umfangsseitig außen umgibt.
- Die beiden Abschnitte des Stegs, die die Planetensätze zwischen sich nehmen, sind axial direkt aneinander befestigt.
- Alternativ nehmen die Stegabschnitte den Zahnkranz axial zwischen sich und sind an diesem befestigt, so dass die Verbindungselemente wie Nieten und Schrauben den Zahnkranz und die Stegabschnitte zugleich miteinander verbinden und aneinander halten.
- Die napfförmigen Abschnitte weisen stirnseitig abgeflachte Bereiche auf, mit denen die Stegabschnitte längs stirnseitig aneinander liegen.
- Radial von dem Zahnkranz nach innen abgehende Befestigungsabschnitte sind an den Stegabschnitten befestigt sind.

### Kurze Beschreibung der Zeichnungen

Die Erfindung wird nachfolgend anhand von Ausführungsbeispielen näher erläutert. Es zeigen:
- Figur 1: eine perspektivische Ansicht von geradverzahnten Planetenrädem und Sonnen in einer Anordnung gemäß Erfindung,
- Figur 2: eine perspektivische Ansicht von schrägverzahnten Planetenrädern und Sonnen in einer Anordnung gemäß Erfindung,
- Figur 3a: schematisch den Aufbau von geradverzahnten Planetenrädem und Sonnen in einer Anordnung gemäß des Standes der Technik,
- Figur 3b: schematisch den Aufbau von schrägverzahnten Planetenrädem und Sonnen in einer Anordnung gemäß des Standes der Technik,
- Figur 3c: schematisch den Aufbau von geradverzahnten Planetenrädem und Sonnen in einer Anordnung gemäß Efindung,
- Figur 3d: schematisch den Aufbau von schrägverzahnten Planetenrädem und Sonnen in einer Anordnung gemäß Erfindung,
- Figur 4: eine Gesamtansicht eines Ausführungsbeispiels eines Differenzials, dessen Stirnräder nach dem in Figur 3d beschriebenen Prinzip angeordnet sind,
- Figur 5: eine Frontalansicht des Stirnraddifferenzials nach Figur 4, an der die Verläufe der Schnitte für die Schnittdarstellungen nachfolgender Figuren nachvollziehbar sind.
- Figur 6: eine Schnittdarstellung des Stirnraddifferenzials nach Figur 4 entlang der Linie VI - VI in Figur 5,
- Figur 7: eine Schnittdarstellung des Stirnraddifferenzials nach Figur 4 entlang der Linie VII - VII in Figur 5,
- Figur 8: eine Schnittdarstellung des Stirnraddifferenzials nach Figur 4 entlang der Linie VIII - VIII in Figur 5,
- Figur 9: einen Gehäuse- bzw. Stegabschnitt des Stirnraddifferenzials als Einzelteil in einer perspektivischen Ansicht,
- Figur 10: den Zahnkranz des Stirnraddifferenzials nach Figur 4 in einer perspektivischen Ansicht,
- Figur 11: die Sonnen des Stirnraddifferenzials als Einzelteile hintereinander angeordnet, in einer Ansicht mit Richtung des Richtungspfeils nach Figur 2 bzw. Figur 6 und
- Figur 12: eine der Sonnen des Stirnraddifferenzials nach Figur 4 in einer perspektivischen Ansicht.

### Detaillierte Beschreibung der Zeichnung

Für gleiche oder gleich wirkende Elemente der Erfindung werden identische Bezugszeichen verwendet. Ferner werden der Übersicht halber in den einzelnen Figuren nur Bezugszeichen dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann. Sie stellen keine abschließende Begrenzung der Erfindung dar.

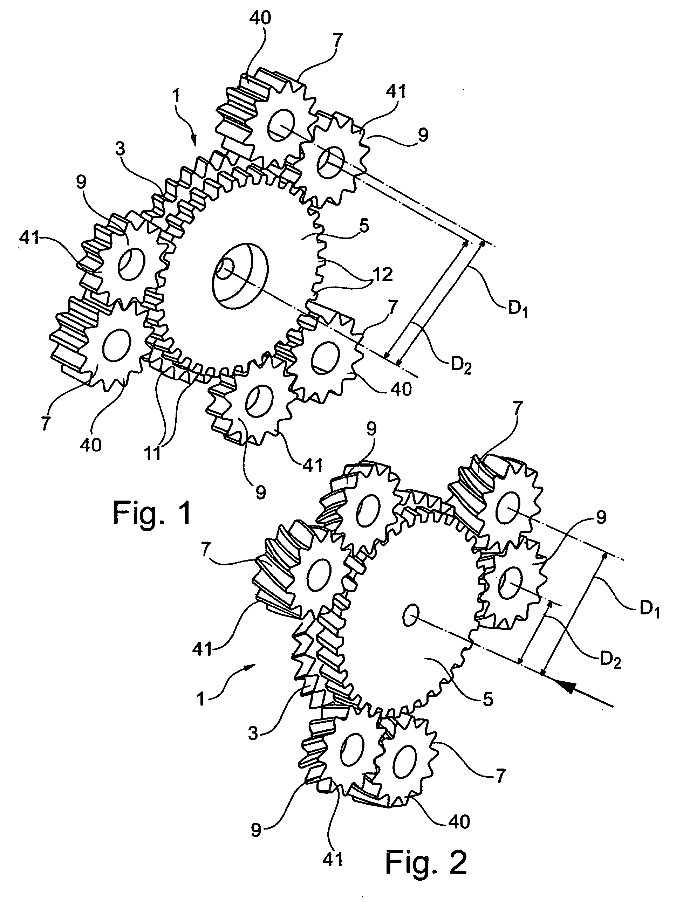

Figur 1 - Figur 1 zeigt eine schematische perspektivische Ansicht des Innenlebens eines ansonsten nicht weiter dargestellten Stirnraddifferenzials mit geradverzahnten Zahnrädern 3, 5, 7 und 9 gemäß Erfindung. Der ersten Sonne 3 ist ein erster Satz von Planetenrädern 7 zugeordnet, die mit dieser im Eingriff stehen. Ebenso ist der zweiten Sonne 5 ein zweiter Satz von Planetenrädern 9 zugeordnet, die mit dieser im Eingriff stehen. Die Zähne 40 des ersten Planetensatzes 7 sind in etwa doppelt so breit wie die Zähne 41 der Planetenräder 9 des zweiten Satzes. Der erste Satz Planetenräder 7 kämmt mit dem zweiten Satz Planetenräder 9.

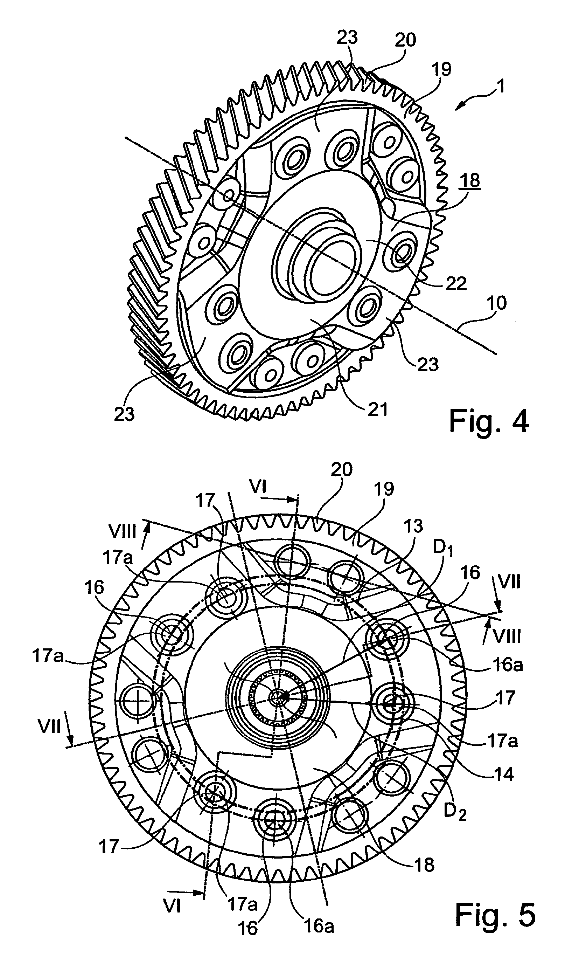

Figur 2 - Figur 2 zeigt eine schematische perspektivische Ansicht des Innenlebens des Stirnraddifferenzials 1 nach Figur 4. Der ersten Sonne 3 ist ein erster Satz von Planetenrädern 7 zugeordnet, die mit dieser im Eingriff stehen. Ebenso ist der zweiten Sonne 5 ein zweiter Satz von Planetenrädem 9 zugeordnet, die mit dieser im Eingriff stehen. Die Zähne 40 des ersten Planetensatzes 7 sind in etwa doppelt so breit wie die Zähne 41 der Planetenräder 9 des zweiten Satzes. Der erste Satz Planetenräder 7 kämmt mit dem zweiten Satz Planetenräder 9.

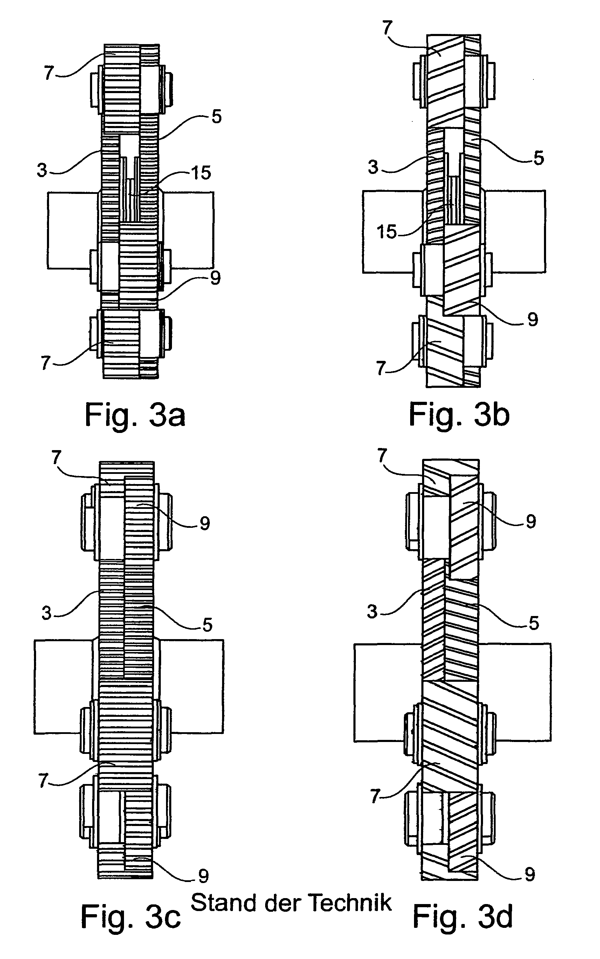

Figuren 3a und 3b - Figur 3a und 3b zeigen jeweils die Anordnung von Zahnrädem 3, 5, 7 und 9 in ansonsten nicht weiter dargestellten Stirnraddifferenzialen gemäß dem Stand der Technik. Bei der in Figur 3a gezeigten Ausführungsform sind alle Zahnräder 3, 5, 7 und 9 geradverzahnt. Bei der in Figur 3b gezeigten Ausführungsform sind alle Zahnräder 3, 5, 7 und 9 schrägverzahnt. Die Sonnen 3 und 5 weisen zueinander den gleichen Durchmesser und die gleiche Zahngeometrie auf. Hierbei sind die erste Sonne 3 und die zweite Sonne 5 derart weit voneinander beabstandet, dass der erste Satz der Planetenräder 7 nicht in den Bereich der zweiten Sonne 5 übergreift. Ebenso ist der zweite Satz der Planetenräder 9 derart ausgestaltet, dass er nicht in den Bereich der ersten Sonne 3 übergreift. Durch diese Anordnungen müssen die erste Sonne 3 und die zweite Sonne 5 axial weit genug voneinander entfernt sein oder die Planetenräder entsprechend schmal ausgelegt sein. Sollen mit dieser Anordnung vergleichbare Drehmomente gegenüber den erfindungsgemäßen Anordnungen nach den Figuren 3c und 3d übertragen werden, muss das Differenzial erheblich breiter gebaut sein. Der Abstand der ersten Sonne 3 und der zweiten Sonne 5 zueinander ist somit einer kompakten Bauweise des Stirnraddifferenzials 1 abträglich. Die erste Sonne 3 und die zweite Sonne 5 werden durch eine Abstandsscheibe oder Reibscheibe 15 voneinander beabstandet.

Figuren 3c und 3d - Figur 3c zeigt die erfindungsgemäße Anordnung von geradverzahnten Zahnrädern 3, 5, 7 und 9 in einem ansonsten nicht weiter dargestellten Stirnraddifferenzial. Figur 3d zeigt schematisch die Anordnung der Zahnräder 3, 5, 7 und 9 mit Schrägverzahnung des in Figur 4 und weiteren Figuren dargestellten Stirnraddifferenzials 1 gemäß der Erfindung , die auch schon mit Figur 2 beschrieben wurde. Die erste Sonne 3 und die zweite Sonne 5 sind bei der erfindungsgemäßen Ausführungsform kaum voneinander beabstandet, da die Sonnen unterschiedliche Durchmesser zueinander aufweisen.

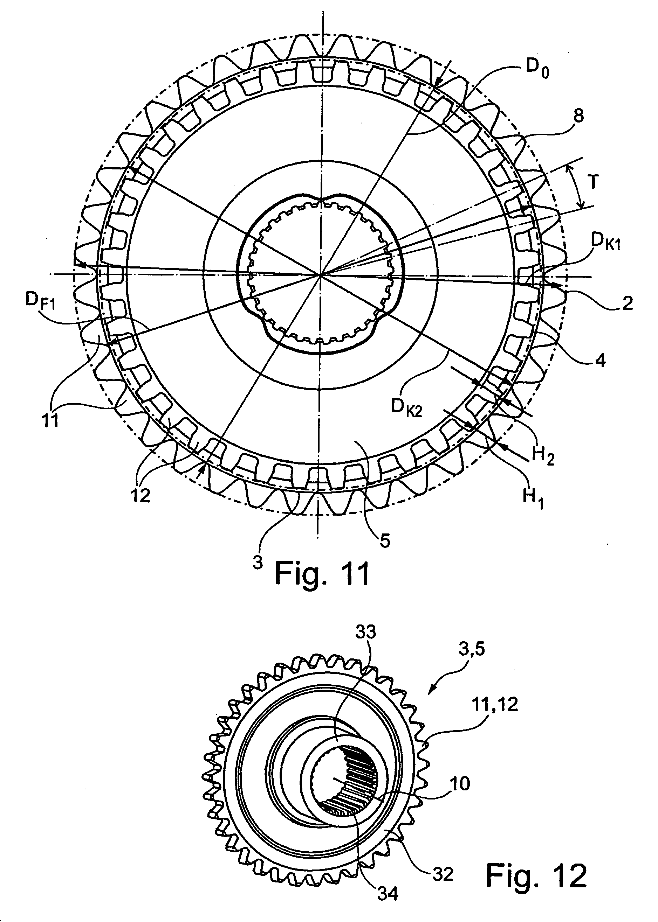

Figur 11 - Figur 11 zeigt die Sonnen 3 und 5 des als Einzelteile hintereinander angeordnet, in einer Ansicht mit Richtung des Richtungspfeils nach Figur 2. Die Anzahl z₁ der Zähne 11 der ersten Sonne 3 ist gleich der Anzahl z₂ der Zähne 12 der zweiten Sonne 5, die in diesem Fall sechsunddreißig mit gleichmäßiger Teilung T = 10 x 36 auf 360°am Umfang verteilte Zähne ist. Durch Profilverschiebung sind die Zähne 11 der ersten Sonne 3 an einem Kopfkreis 2 mit dem Kopfkreisdurchmesser D_{K1} angeordnet, der anders weil größer ist als ein Kopfkreisdurchmesser D_{K2} des Kopfkreises 4, an dem die Zähne 12 der zweiten Sonne 5 angeordnet sind. Der Kopfkreisdurchmesser D_{K1} der Zähne 11 der ersten Sonne 3 ist durch positive Profilverschiebung und der Kopfkreisdurchmesser D_{K2} der Zähne 12 der zweiten Sonne 5 ist durch negative Profilverschiebung realisiert. Außerdem ist der Kopfkreisdurchmesser D_{K2} des Kopfkreises 4 der zweiten Sonne 5 kleiner als der Fußkreisdurchmesser D_{F1} des Fußkreises 8 der ersten Sonne 3. Der Fußkreis 8 mit dem Fußkreisdurchmesser D_{F1} der Zähne 11 der ersten Sonne 3, die die Zahnhöhe H₁ aufweisen, ist in Figur 11 der besseren Übersicht halber nur am Viertelkreis dargestellt. Der Kopfkreisdurchmesser D_{K2} des Kopfkreises 4 der Zähne 12 der zweiten Sonne 5, die die Zahnhöhe H₂ aufweisen, ist zwar in Figur 11 im wesentlichen mit dem Teilkreisdurchmesser Do des Teilkreises 6 gleich dargestellt, kann aber tatsächlich auch kleiner als dieser sein.

Figuren 1 und 2 - Obwohl die Planetenräder 7 des ersten Satzes mit der ersten Sonne 3 und auch mit den Planetenrädern 9 des zweiten Satzes und gleichzeitig die Planetenräder 9 des zweiten Satzes mit der zweiten Sonne 5 kämmen, obwohl die Zähne 40 der Planetenräder 7 sich auch in den Bereich der Zähne 41 der zweiten Planetenräder 9 erstrecken, obwohl die Planetenräder 7 und 9 die gleichen radialen Abmessungen aufweisen und obwohl die Sonnen 3 und 5 die gleichen Zähnezahlen aufweisen, gibt es aufgrund der beschriebenen Verschiebung der Kopfkreisdurchmesser D_{K1} und D_{K2} keine Berührung der Verzahnungen der Planetenräder 7 des ersten Satzes mit der zweiten Sonne 5. Damit jedoch die Zähne 41 der Planetenräder 9 des zweiten Satzes mit den Zähnen 12 der zweiten Sonne 5 kämmen können, wurde erfindungsgemäß der radiale Abstand der Planetenräder 9 zur zweiten Sonne 5 wie folgt beschrieben angepasst:

Figur 5 - Die in Figur 5 durch das Blech eines Stegabschnitts 18 verdeckten Planetenräder 7 des ersten Satzes laufen gemeinsam auf einer gedachten kreisförmigen Umlaufbahn 13 mit dem Radius D₁ um, deren Mittelpunkt auf der Zentralachse 8 des Stirnraddifferenzials 1 liegt. Die ebenso verdeckten Planetenräder 9 des zweiten Satzes laufen gemeinsam auf einer gedachten kreisförmigen Umlaufbahn 14 mit dem Radius D₂ um, deren Mittelpunkt auf der Zentralachse 8 des Stirnraddifferenzials 1 liegt. Die Umlaufbahn 13 schneidet die senkrecht zur Bildebene verlaufenden Rotationsachsen 16 der Planetenräder 7 des ersten Satzes und die Umlaufbahn 14 die senkrecht zur Bildebene verlaufenden Rotationsachsen 17 der Planetenräder 9 des zweiten Satzes. Die Rotationsachsen 16 entsprechen den Symmetrieachsen der Planetenbolzen 16a und die Rotationsachsen 17 entsprechen den Symmetrieachsen der Planetenbolzen 17a. Der Radius D₁ des ersten Satzes der Planetenräder 7 ist größer als der Radius D₂ des zweiten Satzes der Planetenräder 9 und zwar radial um den Betrag, um den die Kopfkreisradien D₁ und D₂ durch die gesamte Profilverschiebung der Sonnen zueinander verändert wurden.

Figuren 4 und 5 - Figur 4 zeigt eine Gesamtansicht eines Ausführungsbeispiels der Erfindung in Form des Stirnraddifferenzials 1 von einer Seite mit Sicht auf einem Stegabschnitt 18 und einem Zahnkranz 19 mit Schrägverzahnung 20. Zu sehen sind in Figur 4 und 5 noch eine axiale Ausformung 21 des Stegabschnitts 18 mit einem zentralen nabenförmigen Abschnitt 22 und mit drei weiteren speichenförmigen Abschnitten 23. Die Abschnitte 23 sind mit gleichem Abstand am Umfang zueinander angeordnet und verlaufen speichenartig radial gerichtet vom nabenförmigen Abschnitt 22 zum Rand des Stegabschnitts 18 hin.

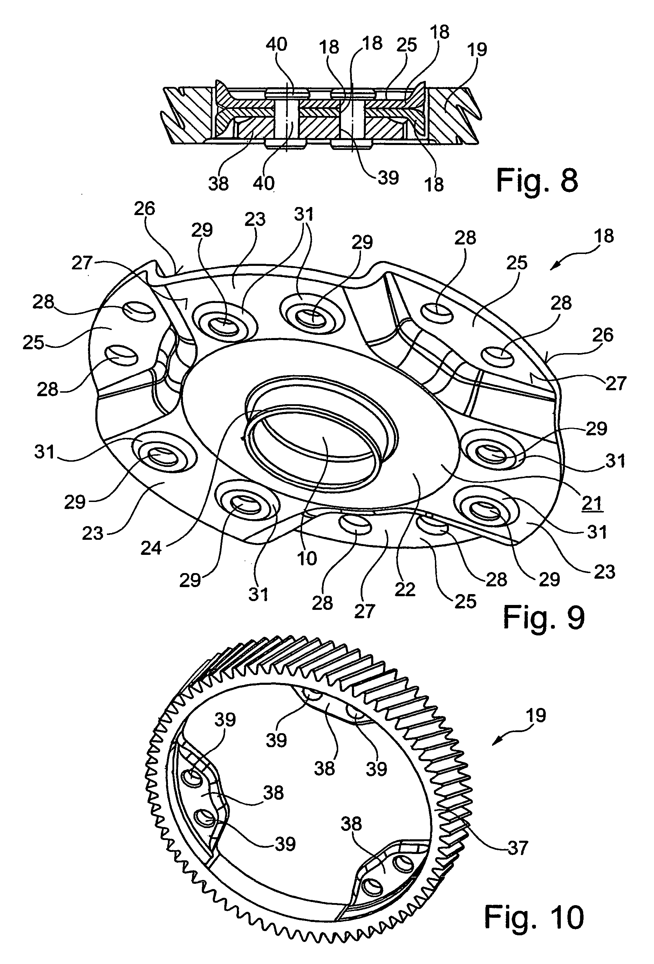

Figur 9 - Figur 9 zeigt den Stegabschnitt 18 als Einzelteil. Der Stegabschnitt 18 ist ein kalt geformtes Bauteil aus Stahlblech. Von dem nabenförmigen Abschnitt 22 der axialen Ausformung 21 geht konzentrisch zur Zentralachse 10 ein hohlzylindrischer Führungsbund 24 ab. Die speichenförmigen Abschnitte 23 sind durch flache Bereiche 25 voneinander getrennt, deren in entgegengesetzte axiale Richtung weisenden parallelen Seitenflächen 26 und 27 jeweils gemeinsam in einer Radialebene liegen. Die flachen Bereiche 25 weisen jeweils zwei Durchgangslöcher 28 auf. In den speichenförmigen Abschnitten 23 sind lochartige Aufnahmen 29 ausgebildet, die jeweils endseitig einen Rand 31 aufweisen.

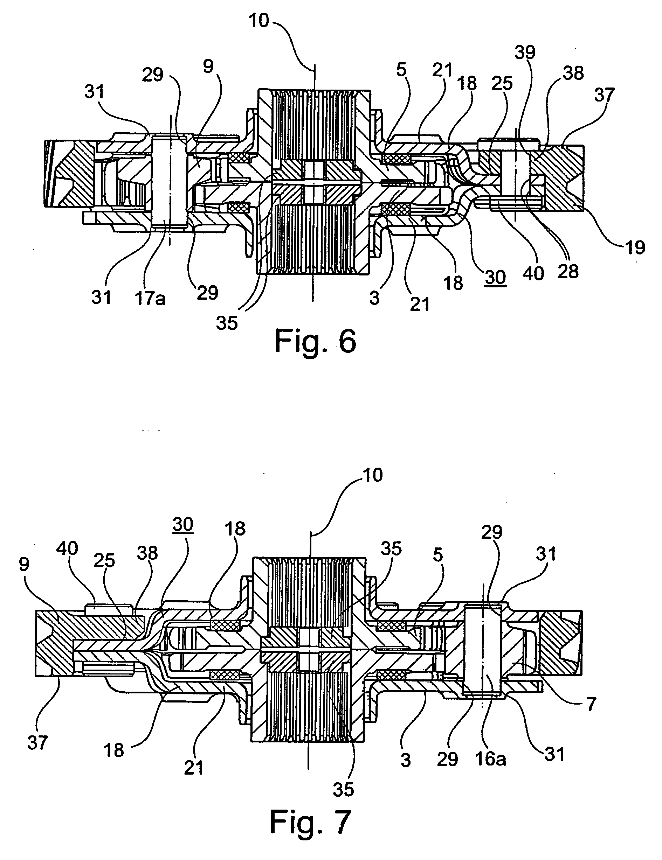

Figuren 6 und 7 - Wie aus den Figuren 6 und 7 hervorgeht, weist das Stirnraddifferenzial 1 zwei der Stegabschnitte 18 auf, die mit den Seitenflächen 26 der flachen Bereiche 25 axial aneinander liegen und so gemeinsam einen Steg 30 bilden. Die Ausformungen 21 beider Stegabschnitte 18 bilden ein Gehäuse, von dem die Sonnen 3 und 5 und die Sätze Planetenräder 7 und 9 teilweise eingekapselt sind.

Figur 12 - Figur 12 zeigt beispielhaft eine Sonne 3 oder 5, die aus einer radialen Scheibe 32 mit den Zähnen 11 oder 12 und aus einem zylindrischen Führungsabschnitt 33 gebildet ist, der konzentrisch zur Zentralachse 10 und axial ausgerichtet ist. Der Führungsabschnitt 33 ist innen beispielsweise mit einer Kerbverzahnung 34 verzahnt.

Figuren 6 und 7 - Die erste Sonne 3 und die zweite Sonne 5 sind axial nebeneinander auf der Zentralachse 10 angeordnet und weisen diese als Rotationsachse auf. An der axialen Trennstelle zwischen den Sonnen 3 und 5 sind zwei Axialscheiben 35 in den Sonnen 3 und 5 aufgenommen. Die Axialscheiben sind axiale Anschläge für nicht dargestellte Steckachsen.

Der ersten Sonne 3 ist der erste Satz Planetenräder 7 (Figur 7) und der zweiten Sonne 5 der zweite Satz Planetenräder 9 (Figur 6) zugeordnet. Die Planetenräder 7 und 9 sind an dem gemeinsamen Steg 30 drehbar über Planetenbolzen 16a bzw. 17a abgestützt. Die Planetenbolzen 16a bzw. 17a sind in den Aufnahmen 29 aufgenommen und mittels der Ränder 31 axial gesichert.

Figur 10 - Figur 10 zeigt den Zahnkranz 19 als Einzelteil. Der Zahnkranz19 ist aus einem Zahnring 37 und aus von dem Zahnring 37 nach innen abgehenden laschenartigen Befestigungsabschnitten 38 mit Löchern 39 gebildet. Das Lochbild der Löcher 39 stimmt mit dem Lochbild der Durchgangslöcher 28 am Stegabschnitt 19 nach Figur 9 überein.

Figuren 6 und 7und 8 - Der Zahnkranz 19 ist an dem Steg 30 konzentrisch zur Zentralachse 10 so befestigt, dass der Zahnring 37 des Zahnkranzes 19 die Stegabschnitte 18 außen umfangsseitig umfasst. Die Befestigungsabschnitte 38 liegen an den Stegabschnitten 18, genauer gesagt and den Bereichen 25, an und sind an diesen mit Nieten 40 befestigt, die alternativ auch Schraubverbindungen sein können. Die Nieten 40 durchgreifen jeweils die Durchgangslöcher 28 und das Loch 39 und halten so zugleich die Einheit aus Zahnrädern 3, 5, 7 und 9 sowie des Stegs 30 zusammen.

### Bezugszeichen

| | | | |
|---|---|---|---|
| 1 | Stirnraddifferenzial | 21 | axiale Ausformung des Stegabschnitts |
| 2 | Kopfkreis der ersten Sonne | 22 | nabenförmige Abschnitt der Ausformung |
| 3 | erste Sonne | 23 | speichenförmiger Abschnitt der Ausformung |
| 4 | Kopfkreis der zweiten Sonne | 24 | Führungsbund |
| 5 | zweite Sonne | 25 | flacher Bereich |
| 6 | Teilkreis | 26 | Seitenfläche |
| 7 | erster Satz Planetenräder | 27 | Seitenfläche |
| 8 | Fußkreis der ersten Sonne | 28 | Durchgangsloch |
| 9 | zweiter Satz Planetenräder | 29 | Aufnahme |
| 10 | Zentralachse des Stirnraddifferenzials | 30 | Steg |
| 11 | Zähne der ersten Sonne | 31 | Rand |
| 12 | Zähne der zweiten Sonne | 32 | Scheibe |
| 13 | Umlaufbahn der Planeten des ersten Satzes | 33 | Führungsabschnitt |
| 14 | Umlaufbahn der Planeten des zweiten Satzes | 34 | Kerbverzahnung |
| 15 | Reibscheibe | 35 | Axialscheibe |
| 16 | Rotationsachse des Planetenrades des ersten Satzes | 36 | nicht vergeben |
| 16a | Planetenbolzen | 37 | Zahnring |
| 17 | Rotationsachse des Planetenrades des zweiten Satzes | 38 | Befestigungsabschnitt |
| 17a | Planetenbolzen | 39 | Loch |
| 18 | Stegabschnitt | 40 | Zahn des Planetenrads 7 |
| 19 | Zahnkranz | 41 | Zahn des Planetenrads 9 |
| 20 | Schrägverzahnung | | |

## Patentansprüche

1. Stirnraddifferenzial (1) mit einer ersten Sonne (3) und einer zweiten Sonne (5), wobei der ersten Sonne (3) ein erster Satz Planetenräder (7) und der zweiten Sonne (5) ein zweiter Satz Planetenräder (9) zugeordnet ist und der erste Satz Planetenräder (7) mit dem zweiten Satz Planetenräder (9) kämmt und dabei die Anzahl der Zähne (11) der ersten Sonne (3) gleich der Anzahl der Zähne (12) der zweiten Sonne (5) ist wobei durch Profilverschiebung die Zähne (11) der ersten Sonne (3) an einem Kopfkreis (2) mit einem Kopfkreisdurchmesser (D_{K1}) angeordnet sind, der anders ist als der Kopfkreisdurchmesser (D_{K2}) eines Kopfkreises (4), an dem die Zähne (12) der zweiten Sonne (5) angeordnet sind, wobei der erste Satz Planetenräder (7) nur mit der ersten Sonne (3) kämmt und wobei der zweite Satz von Planetenrädern (9) nur mit der zweiten Sonne (5) kämmt, **dadurch gekennzeichnet, dass** der Kopfkreisdurchmesser (D_{K1}) des Kopfkreises (2) der Zähne (11) der ersten Sonne (3) durch positive Profilverschiebung und der Kopfkreisdurchmesser (D_{K2}) des Kopfkreises (4) der Zähne (12) der zweiten Sonne (5) durch negative Profilverschiebung realisiert ist.

2. Stirnraddifferenzial nach Anspruch 1, **dadurch gekennzeichnet, dass** der Profilverschiebungsfaktor der ersten Sonne (2) größer als der Zahlenwert 0,8 ist.

3. Stirnraddifferenzial nach Anspruch 1, **dadurch gekennzeichnet, dass** der Profilverschiebungsfaktor der zweiten Sonne (5) kleiner als der Zahlenwert [- 0,8] ist.

4. Stirnraddifferenzial nach Anspruch 1, **dadurch gekennzeichnet, dass** der Absolutwert der Differenzen möglicher Profilverschiebungsfaktoren der Verzahnung der ersten Sonne (2) und der zweiten Sonne(5) mindestens der Zahlenwert 1,6 ist.

5. Stirnraddifferenzial nach Anspruch 4, **dadurch gekennzeichnet, dass** der Kopfkreisdurchmesser (4) einer der Sonnen (5) kleiner ist als der Fußkreisdurchmesser (D_{F1}) der anderen Sonne (2).

6. Stirnraddifferenzial nach Anspruch 1, **dadurch gekennzeichnet, dass** die Planetenräder (7, 9) zueinander gleiche Verzahnungsdurchmesser aufweisen.

7. Stirnraddifferenzial nach Anspruch 1, **dadurch gekennzeichnet, dass** das Stirnraddifferenzial (1) geradverzahnt ist.

8. Stirnraddifferenzial nach Anspruch 1, **dadurch gekennzeichnet, dass** das Stirnraddifferenzial (1) schräg verzahnt ist.

9. Stirnraddifferenzial nach Anspruch 1, **dadurch gekennzeichnet, dass** die Zähne (40) der Planetenräder (7) des ersten Satzes breiter sind als die Zähne (41) der Planetenräder (9) des zweiten Satzes.

10. Stirnraddifferenzial (1) nach Anspruch 1, **dadurch gekennzeichnet, dass** die Planetenräder (7, 9) beider Sätze an mindestens einem gemeinsamen Steg (30) drehbar abgestützt sind, und wobei an dem Steg (30) ein Zahnkranz (19) befestigt ist.

11. Stirnraddifferenzial nach Anspruch 10, **dadurch gekennzeichnet, dass** beide der Sätze Planetenräder (7, 9) gemeinsam an zwei Stegabschnitten (18) des Steges (30) abgestützt sind, wobei die Sätze zwischen den Stegabschnitten (18) angeordnet und beidseitig in den Stegabschnitten (18) abgestützt sind.

12. Stirnraddifferenzial nach Anspruch 10, **dadurch gekennzeichnet, dass** Planetenräder (7, 9) der Sätze und die Sonnen(2,5) wenigstens teilweise von den Stegabschnitten (18) eingekapselt sind.

13. Stirnraddifferenzial nach Anspruch 10, **dadurch gekennzeichnet, dass** die Stegabschnitte (18) direkt aneinander befestigt sind.

14. Stirnraddifferenzial nach Anspruch 13, **dadurch gekennzeichnet, dass** die Stegabschnitte (18) stirnseitig abgeflachte Bereiche (25) aufweisen, mit denen die Stegabschnitte (18) längs stirnseitig aneinander liegen.

15. Stirnraddifferenzial nach Anspruch 13, **dadurch gekennzeichnet, dass** radial von dem Zahnkranz (18) nach innen abgehende Befestigungsabschnitte (38) radial an den Stegabschnitten (18) anliegen und befestigt sind.

## Claims

1. Spur gear differential (1) having a first sun gear (3) and a second sun gear (5), wherein the first sun gear (3) is assigned a first set of planet gears (7) and the second sun gear (5) is assigned a second set of planet gears (9) and the first set of planet gears (7) meshes with the second set of planet gears (9), and here, the number of teeth (11) of the first sun gear (3) is equal to the number of teeth (12) of the second sun gear (5), wherein by means of profile displacement, the teeth (11) of the first sun gear (3) are arranged at a tip circle (2) with a tip circle diameter (D_{K1}) which differs from the tip circle diameter (D_{K2}) of a tip circle (4) at which the teeth (12) of the second sun gear (5) are arranged, wherein the first set of planet gears (7) meshes only with the first sun gear (3), and wherein the second set of planet gears (9) meshes only with the second sun gear (5), **characterized in that** the tip circle diameter (D_{K1}) of the tip circle (2) of the teeth (11) of the first sun gear (3) is realized by positive profile displacement and the tip circle diameter (D_{K2}) of the tip circle (4) of the teeth (12) of the second sun gear (5) is realized by negative profile displacement.

2. Spur gear differential according to Claim 1, **characterized in that** the profile displacement factor of the first sun gear (3) is greater than the numerical value of 0.8.

3. Spur gear differential according to Claim 1, **characterized in that** the profile displacement factor of the second sun gear (5) is less than the numerical value of [-0.8].

4. Spur gear differential according to Claim 1, **characterized in that** the absolute value of the difference between possible profile displacement factors of the toothings of the first sun gear (3) and of the second sun gear (5) is at least the numerical value of 1.6.

5. Spur gear differential according to Claim 4, **characterized in that** the tip circle diameter (D_{K2}) of one of the sun gears (5) is smaller than the root circle diameter (D_{F1}) of the other sun gear (3).

6. Spur gear differential according to Claim 1, **characterized in that** the planet gears (7, 9) have equal toothing diameters.

7. Spur gear differential according to Claim 1, **characterized in that** the spur gear differential (1) is straight-toothed.

8. Spur gear differential according to Claim 1, **characterized in that** the spur gear differential (1) is helically toothed.

9. Spur gear differential according to Claim 1, **characterized in that** the teeth (40) of the planet gears (7) of the first set are broader than the teeth (41) of the planet gears (9) of the second set.

10. Spur gear differential (1) according to Claim 1, **characterized in that** the planet gears (7, 9) of both sets are rotatably supported on at least one common web (30), and wherein a toothed ring (19) is fastened to the web (30).

11. Spur gear differential according to Claim 10, **characterized in that** both of the sets of planet gears (7, 9) are supported jointly on two web portions (18) of the web (30), wherein the sets are arranged between the web portions (18) and are supported at both sides in the web portions (18).

12. Spur gear differential according to Claim 10, **characterized in that** the planet gears (7, 9) of the sets and the sun gears (3, 5) are at least partially encapsulated by the web portions (18).

13. Spur gear differential according to Claim 10, **characterized in that** the web portions (18) are fastened directly to one another.

14. Spur gear differential according to Claim 13, **characterized in that** the web portions (18) have regions (25) which are flattened on the face side and via which the web portions (18) bear longitudinally against one another on the face sides.

15. Spur gear differential according to Claim 13, **characterized in that** fastening portions (38) which project radially inward from the toothed ring (19) bear radially against, and are fastened to, the web portions (18).

## Revendications

1. Différentiel droit (1) comprenant une première roue solaire (3) et une deuxième roue solaire (5), un premier jeu de pignons planétaires (7) étant associé à la première roue solaire (3) et un deuxième jeu de pignons planétaires (9) étant associé à la deuxième roue solaire (5), et le premier jeu de pignons planétaires (7) s'engrenant avec le deuxième jeu de pignons planétaires (9) et, le nombre de dents (11) de la première roue solaire (3) étant en l'occurrence égal au nombre de dents (12) de la deuxième roue solaire (5), les dents (11) de la première roue solaire (3) étant disposées, par déport du profil, sur un cercle de tête (2) présentant un diamètre de cercle de tête (D_{K1}) qui est différent du diamètre de cercle de tête (D_{K2}) d'un cercle de tête (4) sur lequel sont disposées les dents (12) de la deuxième roue solaire (5), le premier jeu de pignons planétaires (7) s'engrenant uniquement avec la première roue solaire (3) et le deuxième jeu de pignons planétaires (9) s'engrenant uniquement avec la deuxième roue solaire (5),
**caractérisé en ce que** le diamètre de cercle de tête (D_{K1}) du cercle de tête (2) des dents (11) de la première roue solaire (3) est réalisé par déport positif du profil et le diamètre de cercle de tête (D_{K2}) du cercle de tête (4) des dents (12) de la deuxième roue solaire (5) est réalisé par déport négatif du profil.

2. Différentiel droit selon la revendication 1, **caractérisé en ce que** le coefficient de déport de la première roue solaire (3) est supérieur à la valeur numérique 0,8.

3. Différentiel droit selon la revendication 1, **caractérisé en ce que** le coefficient de déport de la deuxième roue solaire (5) est inférieur à la valeur numérique [-0,8].

4. Différentiel droit selon la revendication 1, **caractérisé en ce que** la valeur absolue des différences de coefficients de déport possibles de la denture de la première roue solaire (3) et de la deuxième roue solaire (5) vaut au moins la valeur numérique 1,6.

5. Différentiel droit selon la revendication 4, **caractérisé en ce que** le diamètre de cercle de tête (D_{K2}) de l'une des roues solaires (5) est inférieur au diamètre de cercle de pied (D_{F1}) de l'autre roue solaire (3).

6. Différentiel droit selon la revendication 1, **caractérisé en ce que** les pignons planétaires (7, 9) présentent des diamètres de denture égaux les uns aux autres.

7. Différentiel droit selon la revendication 1, **caractérisé en ce que** le différentiel droit (1) est à denture droite.

8. Différentiel droit selon la revendication 1, **caractérisé en ce que** le différentiel droit (1) est à denture hélicoidale.

9. Différentiel droit selon la revendication 1, **caractérisé en ce que** les dents (40) des pignons planétaires (7) du premier jeu sont plus larges que les dents (41) des pignons planétaires (9) du deuxième jeu.

10. Différentiel droit (1) selon la revendication 1, **caractérisé en ce que** les pignons planétaires (7, 9) des deux jeux sont supportés à rotation sur au moins un porte-satellites commun (30), et une couronne dentée (19) étant fixée sur le porte-satellites (30).

11. Différentiel droit selon la revendication 10, **caractérisé en ce que** les deux jeux de pignons planétaires (7, 9) sont supportés conjointement sur deux sections de porte-satellites (18) du porte-satellites (30), les jeux étant disposés entre les sections de porte-satellites (18) et supportés des deux côtés dans les sections de porte-satellites (18).

12. Différentiel droit selon la revendication 10, **caractérisé en ce que** des pignons planétaires (7, 9) des jeux et les roues solaires (3, 5) sont encapsulés au moins partiellement dans les sections de porte-satellites (18).

13. Différentiel droit selon la revendication 10, **caractérisé en ce que** les sections de porte-satellites (18) sont fixées directement l'une à l'autre.

14. Différentiel droit selon la revendication 13, **caractérisé en ce que** les sections de porte-satellites (18) présentent des régions (25) aplaties du côté frontal, par lesquelles les sections de porte-satellites (18) s'appliquent longitudinalement l'une contre l'autre du côté frontal.

15. Différentiel droit selon la revendication 13, **caractérisé en ce que** des sections de fixation (38) partant radialement de la couronne dentée (19) vers l'intérieur s'appliquent radialement contre les sections de porte-satellites (18) et sont fixées radialement à celles-ci.
